# EUROPEAN PATENT APPLICATION

(11) **EP 2 765 105 A1**
(43) Date of publication of application: **13.08.2014**
(21) Application number: 12838780.0
(22) Date of filing: 06.08.2012
(51) Int. Cl.: B65H 75/36

(54) **HOUSING DEVICE**

(30) Priority: 07.10.2011 JP 2011223225
(71) Applicant: Chuo Hatsujo Kabushiki Kaisha, Nagoya-shi, Aichi 458-8505 (JP)
(72) Inventor: SUGIURA Akehito, Nagoya-shi Aichi 458-8505 (JP); ICHIHARA Masakazu, Nagoya-shi Aichi 458-8505 (JP)
(74) Representative: Kramer - Barske - Schmidtchen
(86) International application number: PCT/JP2012/070006
(87) International publication number: WO 2013/051336

(57) **Abstract**

A housing device 10 includes a movable pulley unit 20, first weights 18, and a movable pulley holding mechanism. The movable pulley unit 20 is provided so as to be movable relative to the housing 12 in an up-down direction, and is movable among a first position at which a long object is housed within a housing, a second position at which the long object is pulled out from the housing, and a third position which is set between the first position and the second position. Whereas the long object is pulled out from the housing when the movable pulley unit 20 moves upward, the long object is housed in the housing when the movable pulley unit moves downward. The first weights 18 are separated from the movable pulley unit when the movable pulley unit moves between the first position and the third position, and moves together with the movable pulley unit when the movable pulley unit moves between the third position and the second position. Between the first position and the second position, the movable pulley holding mechanism switches between a state where the movable pulley is movable downward and a state where the movable pulley is immovable downward.

## Description

### TECHNICAL FIELD

The technology disclosed in the present specification relates to a housing device which houses a long object (e.g., a charging cable, an electrical cord, a hose, etc.).

### BACKGROUND ART

A housing device which houses a long object such as an electrical cord has been developed (e.g., Japanese Patent Application Publication No. 2010-52861). The housing device in Japanese Patent Application Publication No. 2010-52861 includes a drum mounted rotatably to a housing, and an electrical cord is wound on an outer peripheral surface of the drum. The electrical cord is pulled out from the drum by a required length when being used, and is wound up after being used.

### SUMMARY OF INVENTION

### TECHNICAL PROBLEM

In such a housing device, it is convenient if it is possible to automatically house the long object in the housing device after the long object is used. When this function is added to the housing device in Patent Literature 1, it is conceivable to bias the drum in a winding-up direction by a spring. In the case where such a configuration is employed, when the long object is pulled out, the drum rotates against the biasing force of the spring and elastic energy is stored in the spring. After the long object is used, the drum rotates in the winding-up direction by the elastic energy stored in the spring and the long object pulled out from the drum is automatically wound up on the drum.

However, the configuration in which the drum is biased in the winding-up direction by the spring has a problem that as the length by which the long object is pulled out is lengthened, the operating force of an operator for pulling out the long object is increased to be excessively great. When the spring constant of the spring which biases the drum is decreased in order to solve this problem, it is possible to prevent the operating force of the operator from becoming excessively great. However, when the spring constant of the spring which biases the drum is decreased, the elastic energy stored in the spring is reduced and thus the force biasing the drum in the winding-up direction is reduced. Thus, a situation occurs where it is impossible to stably wind up the long object on the drum.

An object of the present specification is to provide a housing device which is able to prevent an operating force for pulling out a long object from becoming excessively great and which is able to stably house the pulled-out long object therein.

### SOLUTION TO PROBLEM

A cord housing device disclosed in the present specification is a housing device for housing a long object and includes a housing, a movable pulley, a first weight, and a movable pulley holding mechanism. An intermediate portion of the long object is wound on the movable pulley, the movable pulley is provided so as to be movable relative to the housing in an up-down direction, and the movable pulley is movable among a first position at which the long object is housed within the housing, a second position at which the long object is pulled out from the housing, and a third position which is set between the first position and the second position. The long object housed within the housing is pulled out from the housing when the movable pulley moves upward from the first position toward the second position. The long object pulled out from the housing is housed in the housing when the movable pulley moves downward from the second position toward the first position. The first weight is separated from the movable pulley when the movable pulley moves between the first position and the third position, and moves together with the movable pulley when the movable pulley moves between the third position and the second position. Between the first position and the second position, the movable pulley holding mechanism switches between a state where the movable pulley is movable downward and a state where the movable pulley is immovable downward.

The housing device is switched between a state where the long object is housed within the housing and a state where the long object is pulled out from the housing, by the movable pulley moving relative to the housing in the up-down direction. If the weight of the long object, a frictional force applied to the long object, and the like are neglected, a force for moving the movable pulley upward is a constant value determined by the weight of the movable pulley when the movable pulley moves between the first position and the third position, and is a constant value determined by the weights of the movable pulley and the first weight when the movable pulley moves between the third position and the second position. The weights of the movable pulley and the first weight are adjustable, and thus it is possible to prevent an operating force for pulling out the long object from becoming excessively great.

Meanwhile, a force required in order to house the long object in the housing is great when the length of the long object that has been pulled out from the housing is long, and is small when the length of the long object that has been pulled out from the housing is short. Thus, if the force for housing the long object in the housing is made constant and is set to have an appropriate magnitude when the length of the long object that has been pulled out from the housing is long, the force becomes excessively great when the length of the long object that has been pulled out from the housing is short. On the other hand, if the force for housing the long object in the housing is made constant and is set to have an appropriate magnitude when the length of the long object that has been pulled out from the housing is short, the force becomes excessively small when the length of the long object that has been pulled out from the housing is long. In the above housing device, the force for housing the long object in the housing is a value determined by the weights of the movable pulley and the first weight when the movable pulley moves between the second position and the third position, and is a value determined by the weight of the movable pulley when the movable pulley moves between the third position and the first position. In other words, when the length of the long object that has been pulled out from the housing is long, the force is at a value (a large value) determined by the weights of the movable pulley and the first weight, and when the length of the long object that has been pulled out from the housing is short, the force is at a value (a small value) determined by the weight of the movable pulley. Therefore, it is possible to stably house the long object in the housing with an appropriate force. In addition, the state where the movable pulley is immovable downward can be provided by the movable pulley holding mechanism, and thus it is possible to prevent the long object pulled out from the housing from being unintentionally housed in the housing.

Here, the "up-down direction" in which the movable pulley moves may be such a direction that the movable pulley that has moved upward is movable downward due to its own weight. Thus, in addition to the case where the movable pulley moves in the vertical direction, for example, the movable pulley may move obliquely with respect to the vertical direction.

The above housing device may further include a fixed pulley which is arranged above the movable pulley and on which the intermediate portion of the long object is wound. In this case, when the movable pulley moves upward, the fixed pulley may rotate in a first direction and the long object may be pulled out from the housing, and when the movable pulley moves downward, the fixed pulley may rotate in a second direction opposite to the first direction and the long object may be housed in the housing. The movable pulley holding mechanism may not restrict the fixed pulley from rotating in the first direction, and may switch between a state where the fixed pulley is restricted from rotating in the second direction and a state where the fixed pulley is not restricted from rotating in the second direction. With such a configuration, the long object is guided by the fixed pulley, and thus it is possible to smoothly pull out and wind up the long object. In addition, when rotation of the fixed pulley is stopped, it is possible to keep the position of the movable pulley in the up-down direction.

It should be noted that the movable pulley holding mechanism may include a ratchet gear which is fixed to the fixed pulley and a ratchet pawl which engages with the ratchet gear. The use of such a ratchet mechanism allows the position of the movable pulley in the up-down direction to be kept.

The above housing device may further include a pressing roller which presses the long object against an outer peripheral surface of the fixed pulley. The pressing roller may rotate in accordance with rotation of the fixed pulley, and may stop rotating when the rotation of the fixed pulley stops. According to such a configuration, it is possible to wind up the long object on the outer peripheral surface of the fixed pulley without looseness. Thus, it is possible to obtain a favorable operation feeling.

The above housing device may further include a guide which is mounted on the housing and extends in the up-down direction within the housing. An engagement portion which engages with the guide may be formed in the movable pulley, and the movable pulley may move in the up-down direction while being guided by the guide. According to such a configuration, the movable pulley is guided by the guide, and thus a mechanism which guides the movable pulley is allowed to have a simple configuration.

In the above housing device, a second weight may be mounted on the movable pulley. In this case, a center of gravity of the movable pulley in a state where the second weight is mounted thereon is preferably lower than a center of gravity of the movable pulley in a state where the second weight is not mounted thereon. According to such a configuration, behavior of the movable pulley is stabilized, and it is possible to stably pull out or house the long object.

### BRIEF DESCRIPTION OF DRAWINGS

FIG. 1 is a side view of a housing device of an embodiment and is a diagram showing the internal structure of the housing device by cutting a housing (a state where a charging cable is housed within the housing).
FIG. 2 is a front view of the housing device of the embodiment and is a diagram showing also the internal structure within the housing (the state where the charging cable is housed within the housing).
FIG. 3 is a side view of the housing device of the embodiment and is a diagram showing the internal structure of the housing device by cutting the housing (a state where the charging cable is pulled out from the housing).
FIG. 4 is a front view of the housing device of the embodiment and is a diagram showing also the internal structure within the housing (the state where the charging cable is pulled out from the housing).
FIG. 5 is a front view of a fixed pulley unit.
FIG. 6 is a diagram of the fixed pulley unit as viewed at a position along a VI-VI line in FIG. 5. It should be noted that FIG. 6 does not show a cross-section of the fixed pulley unit taken along the VI-VI line.
FIG. 7 is a cross-sectional view of a fixed pulley.
FIG. 8 is a diagram for explaining a ratchet mechanism provided in the fixed pulley unit.
FIG. 9 is a front view of a movable pulley unit.
FIG. 10 is a top view of the movable pulley unit.
FIG. 11 is a front view of a second weight.
FIG. 12 is a diagram showing a schematic configuration of a guide mechanism.
FIG. 13 is a diagram showing a schematic configuration of a housing device according to a modification.
FIG. 14 is a front view of a fixed pulley unit according to a modification.
FIG. 15 is a diagram for explaining a ratchet mechanism provided in the fixed pulley unit in FIG. 14.
FIG. 16 is a diagram showing a portion of a ratchet pawl in an enlarged manner.
FIG. 17 is a diagram showing a pressing roller mechanism in an enlarged manner.
FIG. 18 is a cross-sectional view of a pressing roller.
FIG. 19 is a diagram (part 1) showing, in an enlarged manner, a groove formed on an outer peripheral surface of a fixed pulley.
FIG. 20 is a diagram (part 2) showing, in an enlarged manner, a groove formed on an outer peripheral surface of a fixed pulley.
FIG. 21 is a diagram (part 3) showing, in an enlarged manner, a groove formed on an outer peripheral surface of a fixed pulley.
FIG. 22 is a diagram (part 4) showing, in an enlarged manner, a groove formed on an outer peripheral surface of a fixed pulley.
FIG. 23 is a diagram (part 5) showing, in an enlarged manner, a groove formed on an outer peripheral surface of a fixed pulley.

### DESCRIPTION OF EMBODIMENTS

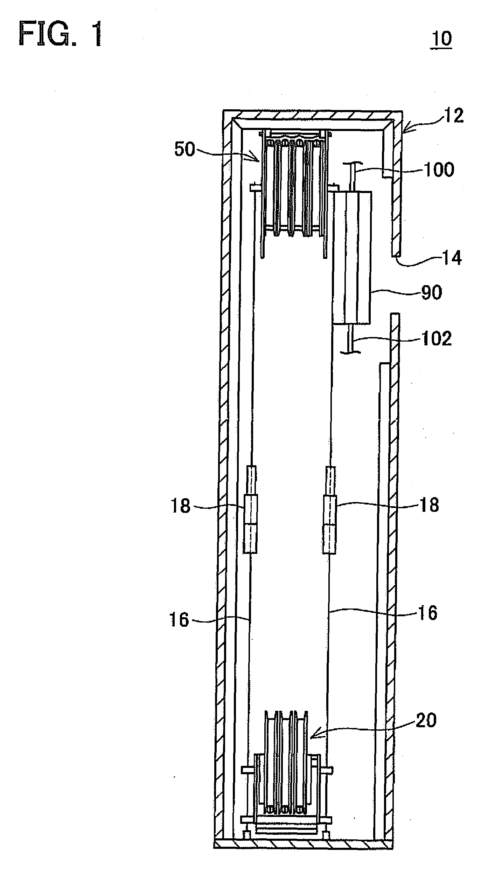

A housing device 10 of an embodiment is a so-called charging station and houses a charging cable 100 for charging a battery mounted in an electric vehicle (EV) or a plug-in hybrid vehicle (PHEV). As shown in FIGS. 1 to 4, the housing device 10 includes a housing 12 and a pulley mechanism (a fixed pulley unit 50 and a movable pulley unit 20) housed within the housing 12.

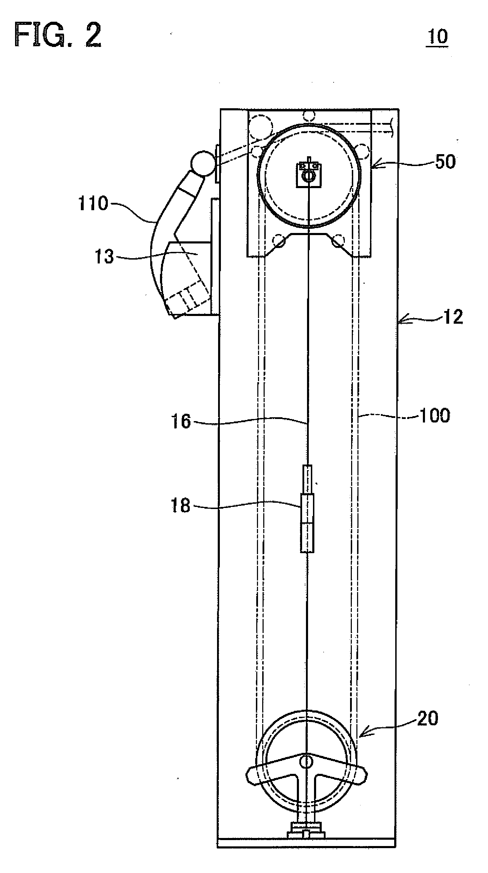

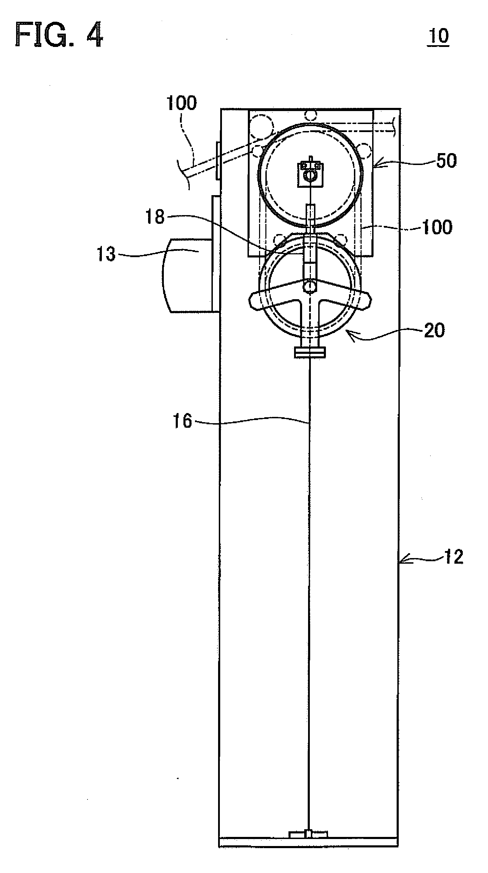

The housing 12 is formed, for example, in a rectangular parallelepiped shape from a plurality of plates. It should be noted that the shape of the housing 12 is not limited to the rectangular parallelepiped shape and the housing 12 can be formed in a circular column shape or a polygonal column shape (e.g., a hexagonal column shape). As shown in FIGS. 2 and 4, a hook 13 is formed on a surface of the housing 12 from which the charging cable 100 is pulled out. The hook 13 is able to hold a charging connector 110 provided at a leading end of the charging cable 100.

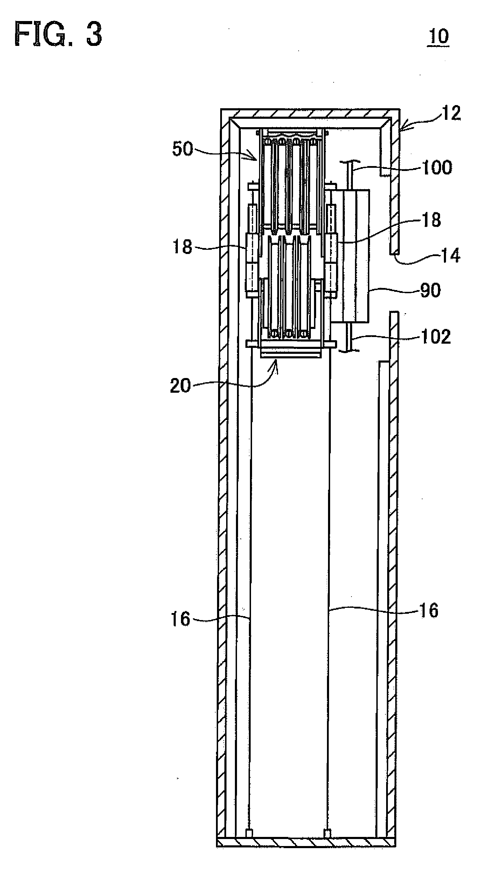

In addition, as shown in FIGS. 1 and 3, a through hole 14 is formed in a side plate of the housing 12. The through hole 14 faces a CCID (Charging Circuit Interrupt Device) 90 arranged within the housing 12. A base end of the charging cable 100 is connected to the CCID 90. The CCID 90 is connected to an external power source, which is not shown, by a power cord 102. A user is allowed to view a display portion of the CCID 90 through the through hole 14 of the housing 12, thereby recognizing a state of charge of a battery.

The pulley mechanism includes the fixed pulley unit 50 and the movable pulley unit 20. An intermediate portion of the charging cable 100 (i.e., a portion between the leading end and the base end of the charging cable 100) is wound on the fixed pulley unit 50 and the movable pulley unit 20 as described in detail later. The fixed pulley unit 50 is mounted on a top plate of the housing 12 so as to be immovable relative to the housing 12 in an up-down direction. Upper ends of guide wires 16 are fixed to the fixed pulley unit 50, and lower ends of the guide wires 16 are fixed to a bottom plate of the housing 12.

The movable pulley unit 20 is movable within the housing 12 in the up-down direction while being guided by the guide wires 16. In a state where the movable pulley unit 20 is located at a bottom portion of the housing 12 (a state in FIGS. 1 and 2), the charging cable 100 is fully housed within the housing 12. In a state where the movable pulley unit 20 is located at an upper portion of the housing 12 (a state in FIGS. 3 and 4), the charging cable 100 is pulled out most from the housing 12. In other words, when the movable pulley unit 20 moves within the housing 12 from the lower portion toward the upper portion, the charging cable 100 housed within the housing 12 is pulled out from the housing 12. On the other hand, when the movable pulley unit 20 moves within the housing 12 from the upper portion toward the lower portion, the charging cable 100 pulled out from the housing 12 is housed in the housing 12.

It should be noted that first weights 18 are mounted on the above-described guide wires 16. As is clear from FIGS. 1 and 2, in the state where the movable pulley unit 20 is located at the bottom portion of the housing 12, the first weights 18 are supported by the guide wires 16. On the other hand, as is clear from FIGS. 3 and 4, in the state where the movable pulley unit 20 is located at the upper portion of the housing 12, the first weights 18 are supported by the movable pulley unit 20. In other words, the movable pulley unit 20 and the first weights 18 move together during a period when the movable pulley unit 20 moves between a position at which the movable pulley unit 20 comes into contact with bottom surfaces of the first weights 18 and a position shown in FIGS. 3 and 4.

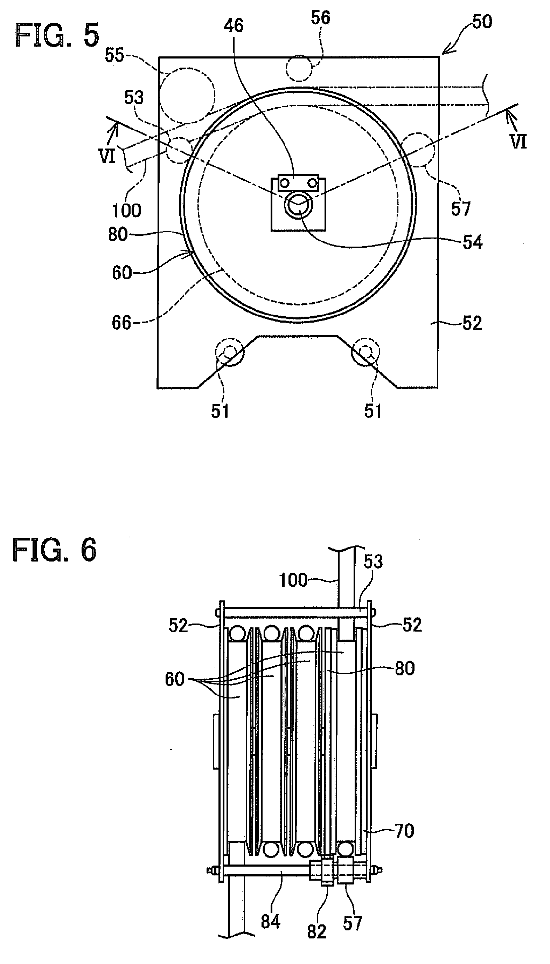

Next, the fixed pulley unit 50 will be described in detail. As shown in FIGS. 5 and 6, the fixed pulley unit 50 includes two support plates 52, a first shaft 54 fixed to the support plates 52, and four fixed pulleys 60 supported rotatably on the first shaft 54.

The support plates 52 are plates having substantially a rectangular shape when being seen in a front view, and upper ends thereof are attached to the top plate of the housing 12. Mounting portions 46 are formed at substantially the centers of the support plates 52, and the upper ends of the guide wires 16 are attached to the mounting portions 46.

The first shaft 54 is fixed at one end thereof to one of the two support plates 52 and is fixed at the other end thereof to the other of the two support plates 52. In other words, the first shaft 54 connects the two support plates 52 to each other. The four fixed pulleys 60 are rotatably mounted on the first shaft 54. In a state where each fixed pulley 60 is mounted on the first shaft 54, the four fixed pulleys 60 are interposed between the two support plates 52. Since the four fixed pulleys 60 are mounted on the single first shaft 54, the rotation axes of the four fixed pulleys 60 are located on the same straight line and the four fixed pulleys 60 are arranged so as to be aligned in the direction of the rotation axes.

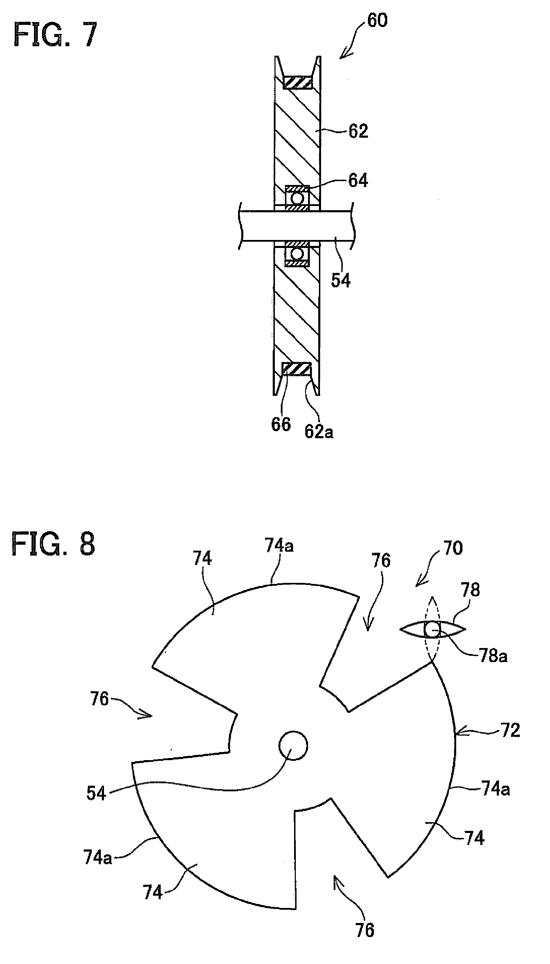

As shown in FIG. 7, each fixed pulley 60 includes a main body 62 and a rubber sheet 66 mounted on an outer peripheral surface of the main body 62. A bearing 64 is provided between an inner peripheral surface of the main body 62 and an outer peripheral surface of the first shaft 54. In the present embodiment, since each fixed pulley 60 is supported on the first shaft 54 via the bearing 64, each fixed pulley 60 is rotatable around the first shaft 54 with a small force. Meanwhile, a groove 62a is formed on the outer peripheral surface of the main body 62 in order to prevent falling off of the charging cable 100. The rubber sheet 66 is mounted on a bottom surface of the groove 62a. Thus, when the charging cable 100 is wound on the fixed pulley 60, the charging cable 100 is brought into contact with the rubber sheet 66. In the present embodiment, since the rubber sheet 66 is provided on the outer peripheral surface of the main body 62, occurrence of slippage between the fixed pulley 60 and the charging cable 100 is prevented. Thus, smooth pulling out and winding up of the charging cable 100 are allowed.

As shown in FIGS. 5 and 6, a first gear 80 and a ratchet gear 70 are fixed to the fixed pulley 60 on which the leading end side (the charging connector 110 side) of the charging cable 100 is wound (the rightmost fixed pulley in the FIG. 6), of the four fixed pulleys 60. Specifically, the first gear 80 is fixed to one lateral surface (a left lateral surface in FIG. 6) of the fixed pulley 60, and the ratchet gear 70 is fixed to the other lateral surface (a right lateral surface in FIG. 6) of the fixed pulley 60.

As clearly shown in FIG. 6, the first gear 80 meshes with a second gear 82, and the second gear 82 is fixed to a second shaft 84. The second shaft 84 is rotatably supported at one end thereof by one of the support plates 52 and is rotatably supported at the other end thereof by the other support plate 52. A pressing roller 57 is mounted on the second shaft 84. The pressing roller 57 presses the charging cable 100 wound on the fixed pulley 60, toward the fixed pulley 60 side to restrain slippage between the fixed pulley 60 and the charging cable 100.

As is clear from FIG. 6, the diameter of the fixed pulley 60 and the diameter of the pressing roller 57 are different from each other. For this reason, in order to pull out the charging cable 100 without the charging cable 100 slipping on the fixed pulley 60 and the pressing roller 57, a rotation speed of the fixed pulley 60 and a rotation speed of the pressing roller 57 need to be different from each other. Thus, a one-way clutch which is not shown is provided between the second shaft 84 and the pressing roller 57. When the charging cable 100 is pulled out, the one-way clutch does not engage with the second shaft 84 and the pressing roller 57 is allowed to freely rotate relative to the second shaft 84. Therefore, when the fixed pulley 60 rotates, the rotation is transmitted to the second shaft 84 via the first gear 80 and the second gear 82, whereby the second shaft 84 rotates. However, since the one-way clutch does not engage with the second shaft 84, the pressing roller 57 rotates at a rotation speed different from the rotation speed of the fixed pulley 60. As a result, the charging cable 100 is smoothly pulled out from the fixed pulley 60 while slippage between the charging cable 100, and the fixed pulley 60 and the pressing roller 57 is restrained. On the other hand, when rotation of the fixed pulley 60 is restricted by a later-described ratchet mechanism, rotation of the second shaft 84 is also restricted via the first gear 80 and the second gear 82. The one-way clutch engages with the second shaft 84, and thus rotation of the pressing roller 57 is also restricted. As a result, even when it is attempted to forcedly push the charging cable 100 into the housing 12, the pressing roller 57 does not rotate due to the rubber sheet 66 of the fixed pulley 60 and the one-way clutch at the pressing roller 57, and thus the charging cable 100 is not pushed into the housing 12.

As shown in FIG. 8, the ratchet gear 70 includes projection regions 74 and recess regions 76. Ratchet grooves (not shown) are formed on an outer peripheral surface 74a of each projection region 74. A ratchet pawl 78 is engageable with each ratchet groove of each projection region 74. An outer peripheral surface of each recess region 76 is recessed from the outer peripheral surface 74a of each projection region 74, and no ratchet groove is formed thereon. Thus, the ratchet gear 70 and the ratchet pawl 78 are not engageable with each other at each recess region 76. Since the ratchet gear 70 is fixed to the fixed pulley 60, when the fixed pulley 60 rotates, the ratchet gear 70 also rotates. When the fixed pulley 60 rotates in a direction in which the charging cable 100 is pulled out (hereinafter, referred to as a pulling-out direction), the ratchet gear 70 and the ratchet pawl 78 do not engage with each other, and the ratchet gear 70 and the fixed pulley 60 are allowed to freely rotate. On the other hand, when the fixed pulley 60 rotates in a direction in which the charging cable 100 is wound up (hereinafter, referred to as a winding-up direction), the ratchet groove and the ratchet pawl 78 engage with each other at the projection region 74 of the ratchet gear 70, and thus rotation of the ratchet gear 70 and the fixed pulley 60 is restricted. Meanwhile, the ratchet gear 70 and the ratchet pawl 78 do not engage with each other at each recess region 76 of the ratchet gear 70, and thus rotation of the ratchet gear 70 and the fixed pulley 60 is not restricted. Thus, the ratchet gear 70 and the fixed pulley 60 rotate in the winding-up direction until the ratchet pawl 78 comes into engagement with the ratchet groove of the projection region 74 of the ratchet gear 70. Since the housing device 10 of the present embodiment has the above configuration, the charging cable 100 is pulled out by a desired length and this state can be kept in the housing device 10. It should be noted that it is possible to release the engagement between the ratchet pawl 78 and the ratchet gear 70 with an operation switch which is not shown. Therefore, when the operation switch is operated to release the engagement between the ratchet pawl 78 and the ratchet gear 70, the fixed pulley 60 is made rotatable in the winding-up direction.

It should be noted that as shown in FIGS. 5 and 6, in addition to the pressing roller 57, various guide rollers 53, 55, and 56 are rotatably mounted on the support plates 52. The guide rollers 53 and 55 guide the leading end side of the charging cable 100 toward the charging connector 110. The guide roller 56 is mounted on the centers of upper end edges of the support plates 52. The guide roller 56 prevents the charging cable 100 from rising from each fixed pulley 60. Since these guide rollers 53, 55, and 56 are provided, the frictional resistance between the charging cable 100 and each fixed pulley 60 is reduced. In addition, stoppers 51 are mounted on lower end edges of the support plates 52. The stoppers 51 are members for restricting upward movement of the movable pulley unit 20. The movable pulley unit 20 is restricted from moving upward by coming into contact with the stoppers 51 (see FIG. 4).

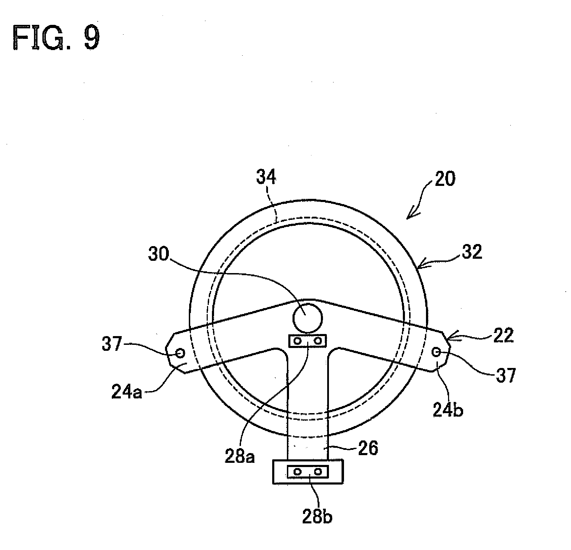

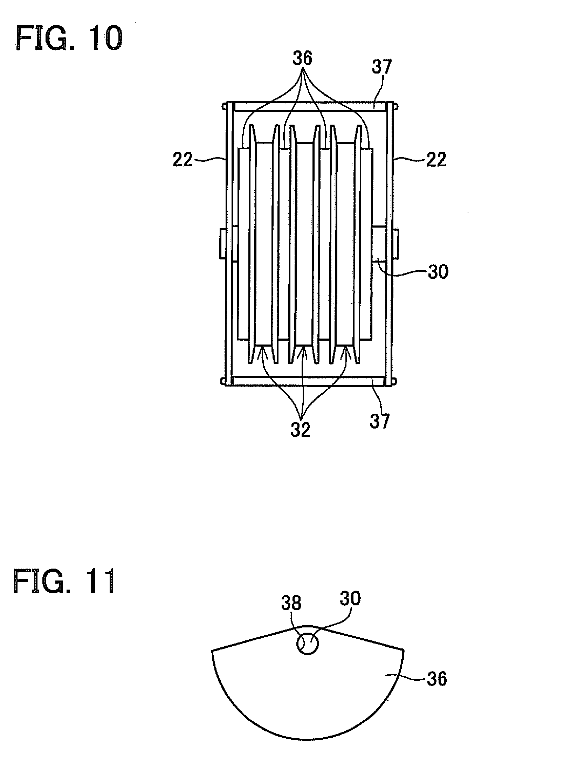

Next, the movable pulley unit 20 will be described in detail. As shown in FIGS. 9 and 10, the movable pulley unit 20 includes two support plates 22, a third shaft 30 fixed to the support plates 22, and three movable pulleys 32 supported rotatably on the third shaft 30.

Each support plate 22 includes a first plate portion 26 extending downward from a position at which the third shaft 30 is fixed; and two second plate portions 24a and 24b extending obliquely downward from an upper end of the first plate portion 26. At the upper end and a lower end of the first plate portion 26, insertion portions 28a and 28b are provided through which the guide wire 16 is inserted. Since the two insertion portions 28a and 28b are provided in each support plate 22, the movable pulley unit 20 is movable in the up-down direction in a stable state while being guided by the guide wires 16. At lower ends of the second plate portions 24a and 24b, holding members 37 are provided which prevent the charging cable 100 from falling off from the movable pulleys 32 (see FIG. 10).

The third shaft 30 is fixed at one end thereof to one of the two support plates 22 and is fixed at the other end thereof to the other of the two support plates 22. The two support plates 22 are connected to each other by the third shaft 30.

The three movable pulleys 32 are rotatably mounted on the third shaft 30. In a state where the movable pulleys 32 are mounted on the third shaft 30, the three movable pulleys 32 are interposed between the two support plates 22. Since the three movable pulleys 32 are mounted on the single third shaft 30, the rotation axes of the three movable pulleys 32 are located on the same straight line and the three movable pulleys 32 are arranged so as to be aligned in the direction of the rotation axes. The movable pulleys 32 also have the same configuration as the fixed pulleys 60, a groove is formed on an outer peripheral surface of each movable pulley 32 in order to prevent falling off of the charging cable 100, and a rubber sheet 34 is provided on a bottom surface of the groove. In addition, each movable pulley 32 is also rotatably supported on the third shaft 30 via a bearing which is not shown. Since each movable pulley 32 is supported on the third shaft 30 via the bearing, each movable pulley 32 is rotatable around the third shaft 30 with a small force.

As shown in FIG. 10, second weights 36 are provided at the outer sides of the left and right movable pulleys 32 and between the adjacent movable pulleys 32, respectively. As shown in FIG. 11, the second weights 36 are sector-shaped plates and have through holes 38 into which the third shaft 30 is inserted. When the third shaft 30 is inserted into the through holes 38, the second weights 36 are supported so as to be rotatable relative to the third shaft 30. Since the second weights 36 are sector-shaped plates, the second weights 36 rotate relative to the third shaft 30 due to their own weights such that the arc portions of the sectors are located at the lower side. Therefore, since the second weights 36 are mounted on the third shaft 30, the center of gravity of the movable pulley unit 20 is lowered and behavior of the movable pulley unit 20 is stabilized. In addition, by providing the second weights 36 in the movable pulley unit 20, a force for pulling out the charging cable 100 from the housing 12 and a force for winding up the charging cable 100 into the housing 12 are adjusted.

It should be noted that the charging cable 100 is wound on the above-described fixed pulley unit 50 and the above-described movable pulley unit 20 in the following manner. Specifically, the charging cable 100 guided into the housing 12 is initially wounded on the fixed pulley 60 to which the first gear 80 and the ratchet gear 70 are fixed (the rightmost fixed pulley in FIG. 6), then wound on the one movable pulley 32, and subsequently wound on the three fixed pulleys 60 and the two movable pulleys 32 in order of the fixed pulley 60 and the movable pulley 32.

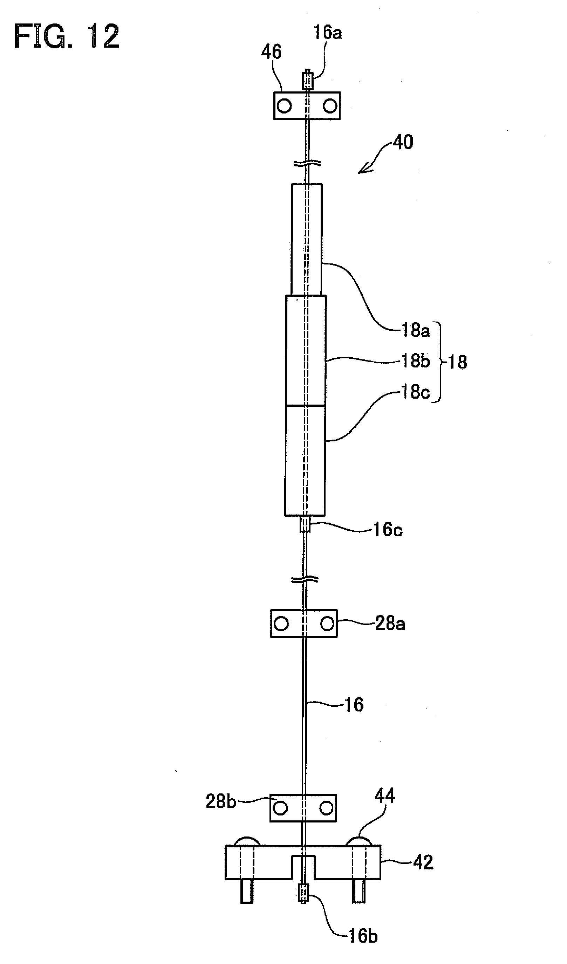

Here, a guide mechanism 40 which guides up/down movement of the movable pulley unit 20 will be described with reference to FIG. 12. As is clear from the above description, the guide mechanism 40 includes the guide wires 16 which guide the movable pulley unit 20. As shown in FIG. 12, the upper end 16a of the guide wire 16 is attached to the mounting portion 46 of the fixed pulley unit 50. The lower end 16b of the guide wire 16 is attached to a mounting block 42. The mounting block 42 is fixed to the bottom plate of the housing 12 by means of screws 44. Thus, the guide wire 16 extends in the up-down direction within the housing 12. As described above, the insertion portions 28a and 28b are provided in the movable pulley unit 20, and the guide wire 16 is inserted through these insertion portions 28a and 28b. Thus, the movable pulley unit 20 moves in the up-down direction within the housing 12 while being guided by the guide wires 16.

A support portion 16c which supports the first weight 18 is provided at a middle point of the guide wire 16. The support portion 16c is sized so as to be able to pass through the insertion portions 28a and 28b of the movable pulley unit 20. Meanwhile, the first weight 18 supported by the support portion 16c is composed of three cylindrical weights 18a, 18b, and 18c. The guide wire 16 is inserted through center holes of the cylindrical weights 18a, 18b, and 18c, and the weights 18a, 18b, and 18c are movable in the up-down direction between the upper end 16a and the middle point (the support portion 16c) of the guide wire 16 while being guided by the guide wire 16. In addition, the weights 18a, 18b, and 18c are sized so as to not be able to pass through the insertion portions 28a and 28b of the movable pulley unit 20. Therefore, when the movable pulley unit 20 moves between the lower end 16b and the middle point (the support portion 16c) of the guide wire 16, the first weight 18 is supported by the support portion 16c of the guide wire 16. In other words, the movable pulley unit 20 and the first weight 18 are separated from each other, and only the movable pulley unit 20 moves in the up-down direction (see FIGS. 1 and 2). On the other hand, when the movable pulley unit 20 moves between the middle point (the support portion 16c) and the upper end 16a of the guide wire 16, the first weight 18 is supported by the movable pulley unit 20, and the movable pulley unit 20 and the first weight 18 move together in the up-down direction (see FIGS. 3 and 4). It should be noted that the weight of the first weight 18 can be set, for example, to about 1/2 of the total weight of the charging cable 100 housed within the housing 12.

An operation of the above-described housing device 10 will be described. In order to pull out the charging cable 100 from the housing device 10, the user holds the charging connector 110 and applies an operating force (a pulling force) to the charging cable 100 via the charging connector 110. Thus, the movable pulley unit 20 (i.e., the movable pulleys 32) moves upward while being guided by the guide wires 16, and the charging cable 100 is pulled out from the inside of the housing 12. When the user stops applying the operating force (the pulling force) to the charging cable 100, rotation of the fixed pulley unit 50 stops by the ratchet mechanism (the ratchet gear 70 and the ratchet pawl 78), and the up/down movement of the movable pulley unit 20 also stops. Thus, in the housing device 10 of the present embodiment, the charging cable 100 is pulled out from the inside of the housing 12 by a desired length, and this state is kept. Therefore, the user is allowed to easily connect the charging connector 110 to a vehicle body.

Here, when the movable pulley unit 20 moves between the lower ends 16b and the middle points (the support portions 16c) of the guide wires 16, the first weights 18 are supported by the support portions 16c of the guide wires 16, and only the movable pulley unit 20 moves in the up-down direction (see FIGS. 1 and 2). Therefore, the operating force (the pulling force) for pulling out the charging cable 100 has a magnitude corresponding to the weight of the movable pulley unit 20 and the weight, the frictional force, and the like of the charging cable 100 that has been wound up by the pulley mechanism (the movable pulley unit 20 and the fixed pulley unit 50). Although the length of the charging cable 100 that has been wound up by the pulley mechanism is long and the weight, the frictional force, and the like thereof are great, since the movable pulley unit 20 and the first weight 18 are separated from each other, the operating force (the pulling force) for pulling out the charging cable 100 does not become excessively great.

On the other hand, when the movable pulley unit 20 moves between the middle points (the support portions 16c) and the upper ends 16a of the guide wires 16, the first weights 18 are supported by the movable pulley unit 20, and the movable pulley unit 20 and the first weights 18 move together in the up-down direction (see FIGS. 3 and 4). Although the movable pulley unit 20 and the first weights 18 move together, since the length of the charging cable 100 that has been wound up by the pulley mechanism (the movable pulley unit 20 and the fixed pulley unit 50) is short and the weight, the frictional force, and the like thereof are small, the operating force (the pulling force) for pulling out the charging cable 100 does not become excessively great. In addition, since the movable pulley unit 20 and the first weights 18 move together, a situation is alleviated where the operating force (the pulling force) for pulling out the charging cable 100 is greatly different between the state where the movable pulley unit 20 is located at the lower ends 16b of the guide wires 16 (the state in FIGS. 1 and 2) and the state where the movable pulley unit 20 is located at the upper ends 16a of the guide wires (the state in FIGS. 3 and 4).

On the other hand, when the charging cable 100 is housed in the housing device 10, engagement between the ratchet gear 70 and the ratchet pawl 78 of the ratchet mechanism is released. Thus, the movable pulley unit 20 moves downward due to its own weight, and, accordingly, the charging cable 100 is automatically housed in the housing 12.

Here, when the movable pulley unit 20 moves between the middle points (the support portions 16c) and the upper ends 16a of the guide wires 16, the movable pulley unit 20 and the first weight 18 move together (the state in FIGS. 3 and 4). Therefore, the force for winding up the charging cable 100 becomes a force corresponding to the weights of the movable pulley unit 20 and the first weights 18. Meanwhile, when the movable pulley unit 20 moves between the middle points (the support portions 16c) and the upper ends 16a of the guide wires 16, the length of the charging cable 100 that has been pulled out from the housing 12 is long, and the length of the charging cable 100 that has been wound up by the pulley mechanism is short. Thus, a relatively great force is required in order to wind up the charging cable 100. For these reasons, in the housing device 10 of the present embodiment, the force for winding up the charging cable 100 does not become excessively great, and it is possible to wind up the charging cable 100 with an appropriate force.

On the other hand, when the movable pulley unit 20 moves between the lower ends 16b and the middle points (the support portions 16c) of the guide wires 16, only the movable pulley unit 20 moves (the state in FIGS. 1 and 2). Therefore, the force for winding up the charging cable 100 becomes a force corresponding to the weight of the movable pulley unit 20. Meanwhile, when the movable pulley unit 20 moves between the lower ends 16b and the middle points (the support portions 16c) of the guide wires 16, the length of the charging cable 100 that has been pulled out from the housing 12 is short, and the length of the charging cable 100 that has been wound up by the pulley mechanism is long. Therefore, a great force is not required in order to wind up the charging cable 100. For these reasons, it is possible to wind up the charging cable 100 with an appropriate force.

As is clear from the above description, in the housing device 10 of the present embodiment, the charging cable 100 is housed in the housing 12 by using the pulley mechanism (the fixed pulley unit 50 and the movable pulley unit 20). Therefore, adjustment of the number and the movement amounts of the movable pulleys allows the length of the charging cable that can be housed within the housing 12 to be adjusted to any length. In addition, since the simple pulley mechanism is used, a breakdown is less likely to occur.

In addition, in the housing device 10 of the present embodiment, the charging cable 100 is automatically wound up into the housing 12 by using the weights of the movable pulley unit 20 and the first weight 18. Thus, the force for pulling out the charging cable 100 does not become excessively great, and the force for winding up the charging cable 100 is allowed to have an appropriate magnitude. Therefore, it is possible to stabilize the force for pulling out the charging cable 100 and the force for winding up the charging cable 100.

Furthermore, in the housing device 10 of the present embodiment, the guide wires 16 are used in the guide mechanism which guides the movable pulley unit 20. Thus, it is possible to reduce the size of the guide mechanism and it is possible to reduce the size of the housing 12. Moreover, the movable pulleys 32 and the fixed pulleys 60 are rotatably supported on the shafts 30 and 54 via the bearings. Thus, the frictional resistances of the movable pulleys 32 and the fixed pulleys 60 are reduced, and it is possible to pull out and wind up the charging cable 100 with a small force.

While the details of an embodiment of the present invention have been explained above, these are not to be considered as being limitative, or as limiting the scope of the Claims. Embodiments in which various alterations and changes have been made to the concrete case described above by way of example are also included within the scope of the techniques described in the Claims.

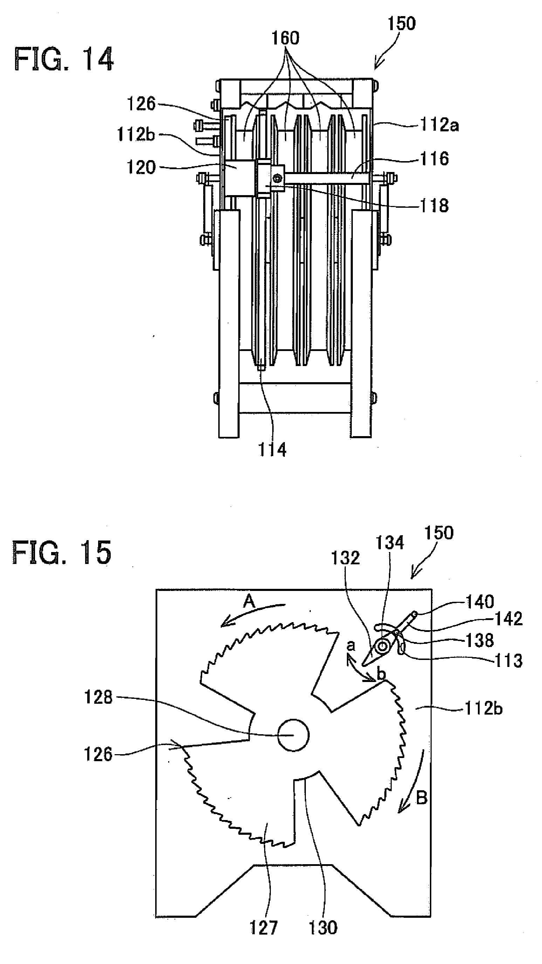

For example, in the above-described embodiment, in the ratchet mechanism which restricts rotation of the fixed pulley 60, the engagement between the ratchet pawl 78 and the ratchet gear 70 is released with the operation switch, but the technology disclosed in the present specification is not limited to such an example. For example, as shown in FIGS. 14 to 16, engagement between a ratchet pawl 132 and a ratchet gear 126 may be released by biasing the ratchet pawl 132 to a neutral position by a return spring 142.

Specifically, as shown in FIGS. 14 to 16, a fixed pulley unit 150 includes two support plates 112a and 112b, a shaft 128 fixed to these support plates 112a and 112b, and four fixed pulleys 160 supported rotatably on the shaft 128. The ratchet gear 126 and a gear 114 are fixed to one of the four fixed pulleys 160 (the leftmost fixed pulley in FIG. 14 (i.e., the fixed pulley at the charging connector 110 side)). As shown in FIG. 15, the ratchet gear 126 includes projection regions 127 having ratchet grooves formed on outer peripheral surfaces thereof; and recess regions 130 whose outer peripheral surfaces are located at the rotation axis side with respect to the projection regions 127. The ratchet pawl 132 is engageable with each of the ratchet grooves of the projection regions 127. At each recess region 130, no ratchet groove is formed and the ratchet gear 126 and the ratchet pawl 132 do not engage with each other.

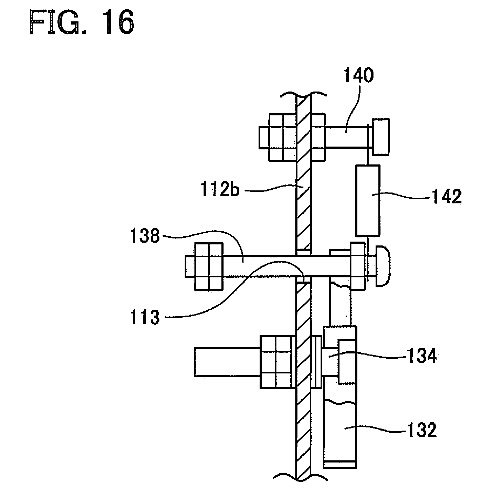

As shown in FIGS. 15 and 16, the center of the ratchet pawl 132 is rotatably mounted on a shaft 134 fixed to the support plate 112b. A guide pin 138 is fixed to a base end of the ratchet pawl 132. The guide pin 138 is inserted through a guide groove 113 formed on the support plate 112b. Thus, when the ratchet pawl 132 rotates around the shaft 134, the guide pin 138 moves within the guide groove 113. One end of the return spring 142 is connected to the guide pin 138. The other end of the return spring 142 is fixed to a shaft 140 fixed to the support plate 112b. Since the return spring 142 is provided between the shaft 140 and the guide pin 138, the guide pin 138 is biased toward a neutral position (the center of the guide groove 113 (a position shown in FIG. 15)). Therefore, when the guide pin 138 is displaced from the neutral position toward an end portion of the guide groove 113, a biasing force is applied to the guide pin 138 such that the guide pin 138 returns to the neutral position. Thus, even when the ratchet pawl 132 has rotated in any of the directions of arrows a and b in FIG. 15, the ratchet pawl 132 returns to a state shown in FIG. 15 (the neutral position) at each recess region 130 of the ratchet gear 126.

In such a configuration, when the charging cable 100 is pulled out from the housing 12, the fixed pulley 160 rotate, and, accordingly, the ratchet gear 126 rotates in the direction of an arrow A. In the case where the ratchet gear 126 rotates in the direction of the arrow A, when the ratchet pawl 132 moves past the projection region 127 of the ratchet gear 126, the ratchet pawl 132 and the projection region 127 come into contact with each other and the ratchet pawl 132 rotates in the direction of the arrow a. Thus, when the pulling out of the charging cable 100 from the housing 12 is stopped in this state, the ratchet pawl 132 and the ratchet groove of the ratchet gear 126 engage with each other. Thus, the ratchet gear 126 is restricted from rotating in the direction of an arrow B, and the rotation of the fixed pulley 160 stops. As a result, the movable pulley unit is restricted from moving downward due to its own weight, and it is possible to prevent the charging cable 100 from being unintentionally housed in the housing 12.

On the other hand, in order to release the engagement between the ratchet gear 126 and the ratchet pawl 132, the charging cable 100 is further pulled out from the housing 12 to rotate the ratchet gear 126 in the direction of the arrow A. Then, when the ratchet gear 126 is rotated until the ratchet pawl 132 comes to a position corresponding to the recess region 130 of the ratchet gear 126, the force pulling out the charging cable 100 is relaxed, and the ratchet gear 126 is rotated in the direction of the arrow B. In this case, when the ratchet pawl 132 moves past the projection region 127, the ratchet pawl 132 and the projection region 127 come into contact with each other and the ratchet pawl 132 rotates in the direction of an arrow b. In this state, the ratchet pawl 132 and any ratchet groove of the ratchet gear 126 do not engage with each other, and the rotation of the ratchet gear 126 is not restricted. As a result, the movable pulley unit moves downward due to its own weight, and the charging cable 100 is automatically wound up into the housing 12.

As is clear from the above description, in the fixed pulley unit 150, simply biasing the ratchet pawl 132 to the neutral position by the return spring 142 allows the pulled-out charging cable 100 to be prevented from being unintentionally housed in the housing 12. On the other hand, by starting winding-up of the charging cable 100 when the ratchet pawl 132 comes to a position corresponding to the recess region 130 of the ratchet gear 126, it is possible to automatically wind up the charging cable 100 by using the weight of the movable pulley unit.

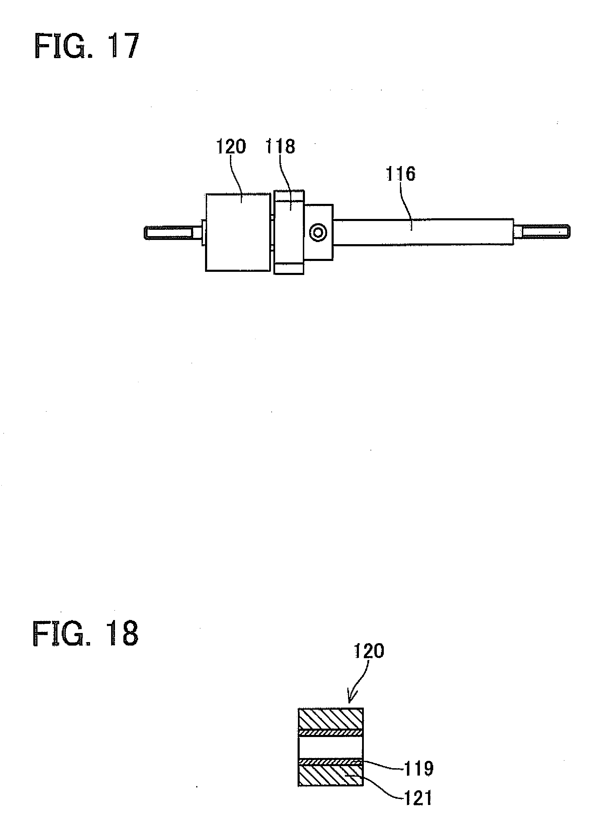

In the above-described fixed pulley unit 150 as well, as shown in FIG. 14, a pressing roller 120 is driven by the gear 114 fixed to the fixed pulley 160. Specifically, as shown in FIGS. 14 and 17, the gear 114 meshes with a gear 118, and the gear 118 is fixed to a shaft 116. The shaft 116 is rotatably supported by the support plates 112a and 112b. The pressing roller 120 is mounted on the shaft 116. The pressing roller 120 presses the charging cable 100 wound on the fixed pulley 160, toward the fixed pulley 160 side to restrain slippage between the fixed pulley 160 and the charging cable 100.

As shown in FIG. 18, the pressing roller 120 includes a one-way clutch 119 and a cylindrical resin member 121 press-fitted onto an outer peripheral surface of the one-way clutch 119. The one-way clutch 119 is mounted on the shaft 116. When the shaft 116 rotates in a direction in which the charging cable 100 is pulled out, the one-way clutch 119 does not transmit the rotation of the shaft 116 to the resin member 121. Therefore, when the shaft 116 rotates in the direction in which the charging cable 100 is pulled out from the housing 12, the resin member 121 (i.e., the pressing roller 120) freely rotates regardless of the rotation of the shaft 116. Thus, the charging cable 100 is smoothly pulled out from the fixed pulley 160 while slippage between the fixed pulley 160 and the pressing roller 120, and the charging cable 100 is restrained. On the other hand, when the shaft 116 rotates in a direction in which the charging cable 100 is wound up, the one-way clutch 119 transmits the rotation of the shaft 116 to the resin member 121. Therefore, when the shaft 116 rotates in the direction in which the charging cable 100 is housed in the housing 12, the resin member 121 (i.e., the pressing roller 120) rotates in conjunction with the rotation of the shaft 116. Thus, the charging cable 100 is wound up on the fixed pulley 160 without looseness. It should be noted that when rotation of the fixed pulley 160 is restricted by the ratchet mechanism, the gear 114 does not rotate, and thus the gear 118 and the shaft 116 also do no rotate. When the shaft 116 rotates in the direction in which the charging cable 100 is wound up, the one-way clutch 119 transmits the rotation of the shaft 116 to the resin member 121. Therefore, even when it is attempted to forcedly push the charging cable 100 into the housing 12, the pressing roller 120 does not rotate and the charging cable 100 is not pushed into the housing 12. Thus, it is possible to wind up the charging cable 100 into the housing 12 without looseness.

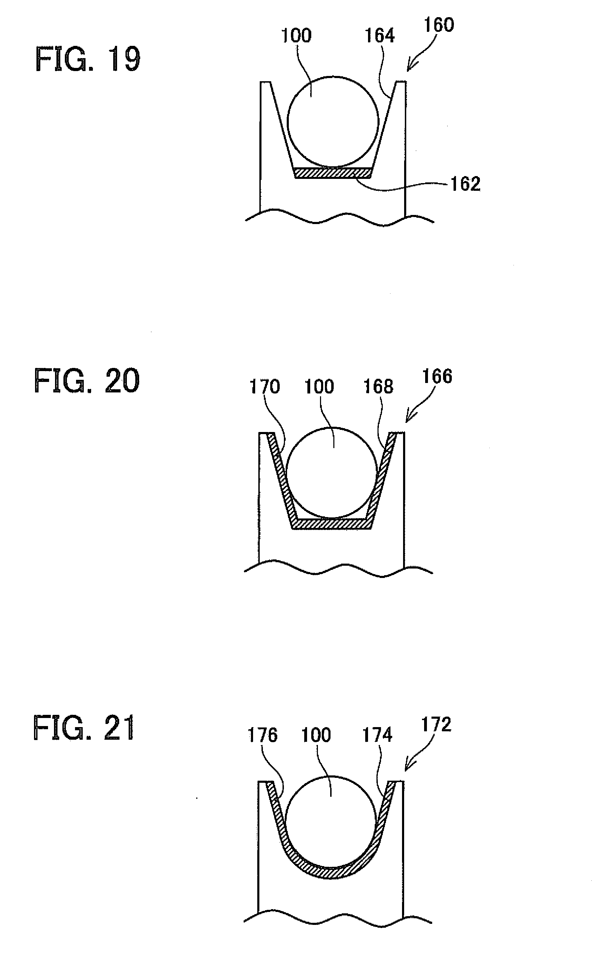

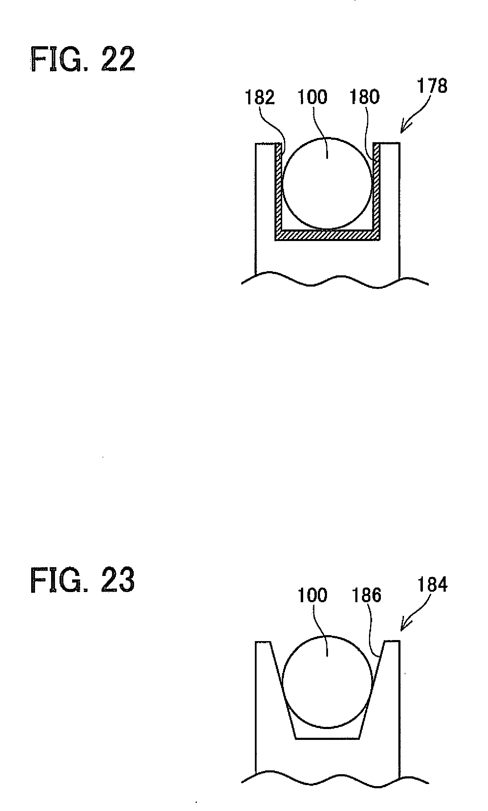

In addition, in the above-described embodiment, the rubber sheet 66 is provided on the bottom surface of the groove 62a on the outer peripheral surface of each fixed pulley 60, but the technology disclosed in the present specification is not limited to such an example. For example, as shown in FIG. 19, a thin rubber sheet 162 may be provided on a bottom surface of a groove 164 of the fixed pulley 160. Alternatively, as shown in FIG. 20, a rubber sheet 170 may be provided on a bottom surface and lateral surfaces of a groove 168 of a fixed pulley 166. Still alternatively, as shown in FIG. 21, a round-shaped groove 174 may be formed on an outer peripheral surface of a fixed pulley 172, and a rubber sheet 176 may be provided on a bottom surface and lateral surfaces of the groove 174. Still alternatively, as shown in FIG. 22, a groove 180 having lateral surfaces and a bottom surface which are orthogonal to each other may be formed on an outer peripheral surface of a fixed pulley 178, and a rubber sheet 182 may be provided on the bottom surface and the lateral surfaces of the groove 180. Furthermore, as shown in FIG. 23, no rubber sheet may be provided in a groove 186 on an outer peripheral surface of a fixed pulley 184, and the charging cable may be press-fitted into the groove 186, thereby preventing slippage of the charging cable 100.

In addition, in the above-described embodiment, the housing device (i.e., the charging station) which houses the charging cable 100 is taken as an example, but the present invention is not limited to such an example, and a housing device which houses a long object such as an electrical cord, a hose, or the like can be taken as an example.

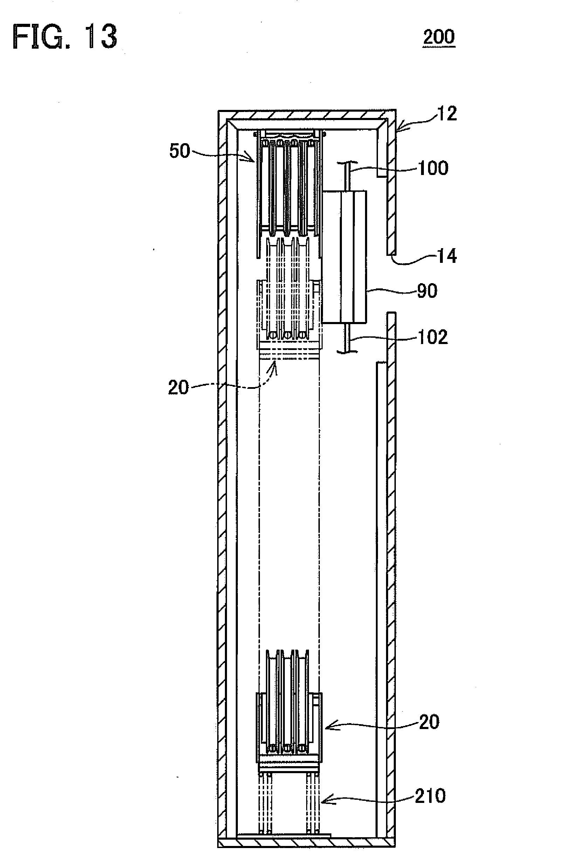

In addition, in the above-described embodiment, the operating force for pulling out the charging cable 100 from the housing 12 (the force for winding up the charging cable 100 into the housing 12) is adjusted by providing the second weights 36 in the movable pulley unit 20, but the present invention is not limited to such an example. For example, as in a housing device 200 shown in FIG. 13, the movable pulley unit 20 and the bottom plate of the housing 12 may be connected to each other by springs 210, and the operating force for pulling out the charging cable 100 from the housing 12 may be adjusted by spring forces of the springs 210.

Moreover, in the above-described embodiment, the movable pulley unit 20 is guided by the guide wires (an example of a guide) provided within the housing 12, but the technology disclosed in the present specification is not limited to such an example. For example, a guide rail may be provided on the inner surface of the housing 12, and the movable pulley unit may move up and down while being guided by the guide rail. In addition, instead of the guide rail, a bar-shaped steel material, a flexible wire, or the like may be used as the "guide".

Since the technical elements explained in this specification and in the drawings are capable of providing technical utility either singly or in various combinations, accordingly they are not to be considered as being limited to being combined as described in the Claims of this application. Moreover, the technology shown by way of example in this specification and in the drawings is capable of attaining a plurality of objectives simultaneously, and has technical utility for attaining each of those objectives individually.

## Claims

1. A housing device for housing a long object, the housing device comprising a housing, a movable pulley, a first weight, and a movable pulley holding mechanism, wherein
an intermediate portion of the long object is wound on the movable pulley, the movable pulley is provided so as to be movable relative to the housing in an up-down direction, and the movable pulley is movable among a first position at which the long object is housed within the housing, a second position at which the long object is pulled out from the housing, and a third position which is set between the first position and the second position,
the long object housed within the housing is pulled out from the housing when the movable pulley moves upward from the first position toward the second position, and the long object pulled out from the housing is housed in the housing when the movable pulley moves downward from the second position toward the first position,
the first weight is separated from the movable pulley when the movable pulley moves between the first position and the third position, and moves together with the movable pulley when the movable pulley moves between the third position and the second position, and
between the first position and the second position, the movable pulley holding mechanism switches between a state where the movable pulley is movable downward and a state where the movable pulley is immovable downward.

2. The housing device according to claim 1, further comprising a fixed pulley which is arranged above the movable pulley and on which the intermediate portion of the long object is wound, wherein
when the movable pulley moves upward, the fixed pulley rotates in a first direction and the long object is pulled out from the housing, and when the movable pulley moves downward, the fixed pulley rotates in a second direction opposite to the first direction and the long object is housed in the housing, and
the movable pulley holding mechanism does not restrict the fixed pulley from rotating in the first direction, and switches between a state where the fixed pulley is restricted from rotating in the second direction and a state where the fixed pulley is not restricted from rotating in the second direction.

3. The housing device according to claim 2, wherein the movable pulley holding mechanism includes a ratchet gear which is fixed to the fixed pulley and a ratchet pawl which engages with the ratchet gear.

4. The housing device according to claim 2 or 3, further comprising a pressing roller which presses the long object against an outer peripheral surface of the fixed pulley, wherein
the pressing roller rotates in accordance with rotation of the fixed pulley, and stops rotating when the rotation of the fixed pulley stops.

5. The housing device according to any one of claims 1 to 4, further comprising a guide which is mounted on the housing and extends in the up-down direction within the housing, wherein
an engagement portion with which the guide engages is formed in the movable pulley, and the movable pulley moves in the up-down direction while being guided by the guide.

6. The housing device according to any one of claims 1 to 5, further comprising a second weight mounted on the movable pulley, wherein
a center of gravity of the movable pulley in a state where the second weight is mounted thereon is lower than a center of gravity of the movable pulley in a state where the second weight is not mounted thereon.
